(19) **Europäisches Patentamt / European Patent Office / Office européen des brevets**

(11) **EP 4 386 620 A1**

(12) # EUROPEAN PATENT APPLICATION
published in accordance with Art. 153(4) EPC

(43) Date of publication:
**19.06.2024 Bulletin 2024/25**

(21) Application number: **22866741.6**

(22) Date of filing: **09.09.2022**

(51) International Patent Classification (IPC):
**G06N 3/04** $^{(2023.01)}$

(52) Cooperative Patent Classification (CPC):
**G06F 11/22; G06N 3/04; G06N 3/088; G06N 3/09;
Y02D 30/70**

(86) International application number:
**PCT/CN2022/117999**

(87) International publication number:
**WO 2023/036280 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021 CN 202111061622**

(71) Applicant: **Huawei Technologies Co., Ltd.
Shenzhen, Guangdong 518129 (CN)**

(72) Inventors:
• **CHAI, Xiaomeng
  Shenzhen, Guangdong 518129 (CN)**
• **WU, Yiqun
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MODEL TEST METHOD AND APPARATUS**

(57)     A model test method and an apparatus are provided. The method includes: A terminal receives first information from a network device; the terminal determines at least one test set based on the first information; the terminal tests an AI model based on the at least one test set, to obtain a test result; and the terminal notifies the network device of the test result of the AI model. According to the method and the apparatus, the network device can test an AI model deployed in the terminal.

FIG. 5

## Description

## CROSS-REFERENCE TO RELATED APPLICATIONS

This application claims priority to Chinese Patent Application No. 202111061622.1, filed with the China National Intellectual Property Administration on September 10, 2021 and entitled "MODEL TEST METHOD AND APPARATUS", which is incorporated herein by reference in its entirety.

## TECHNICAL FIELD

This application relates to the field of communication technologies, and in particular, to a model test method and an apparatus.

## BACKGROUND

In a wireless communication network, for example, in a mobile communication network, increasingly diversified services are supported by the network. Therefore, increasingly diversified requirements need to be met. For example, the network needs to be capable of supporting an ultra-high rate, ultra-low latency, and/or a massive connection. These features make network planning, network configuration, and/or resource scheduling increasingly complex. In addition, because a function of the network is increasingly powerful, for example, a supported spectrum is increasingly high, and new technologies such as a high-order multiple-input multiple-output (multiple input multiple output, MIMO) technology, beamforming, and/or beam management are supported, network energy saving becomes a hot research topic. These new requirements, scenarios, and features bring an unprecedented challenge to network planning, operation and maintenance, and efficient operation. To meet this challenge, an artificial intelligence technology may be introduced into the wireless communication network, to implement network intelligence. Based on this, how to effectively implement artificial intelligence in the network is a problem worth studying.

## SUMMARY

This application provides a model test method and an apparatus. A network device tests an AI model deployed in a terminal, so that the network device evaluates, manages, and controls the AI model deployed in the terminal.

According to a first aspect, a model test method is provided. The method is performed by a terminal, or may be performed by a component (a processor, a chip, or another component) disposed in a terminal, a software module, or the like. The method includes: receiving first information from a network device, where the first information is used to determine at least one test set; testing an AI model based on the at least one test set, to obtain a test result; and sending second information to the network device, where the second information indicates the test result of the AI model.

According to the foregoing method, the terminal determines the at least one test set based on the first information sent by the network device, and tests the AI model by using the at least one test set, to obtain the test result. In addition, the terminal feeds back the test result of the AI model to the network device, so that the network device can test an AI model deployed in the terminal. Therefore, the network device can evaluate, manage, and control the AI model used by the terminal.

In a design, the first information includes indication information of the at least one test set. Alternatively, the first information includes a reference signal, and the method includes: determining the at least one test set based on the reference signal.

According to the foregoing method, the terminal may determine the at least one test set based on the indication information of the at least one test set, the reference signal, or the like. Particularly, when the terminal device determines the at least one test set based on the reference signal, the network device may not need to separately send a test set to the terminal device. The terminal may determine the test set, and the like by using the reference signal. Therefore, signaling overheads are reduced.

In a design, the second information indicates at least one of the following: AI models participating in the test, a test result corresponding to each AI model, or a test set corresponding to each test result.

In a design, whether the AI model meets a performance requirement may be evaluated by the network device. For example, the network device may determine, based on the test result reported by the terminal, whether the AI models participating in the test meets the requirement. Subsequently, the network device may send first indication information to the terminal based on whether the AI models participating in the test meets the requirement, and the like.

Optionally, in this design, the test result includes a first test result. The first test result indicates an output that is of the AI model and that is obtained based on the at least one test set; or the first test result indicates a performance indicator of the AI model obtained by testing the AI model based on the at least one test set.

Optionally, in this design, the first indication information indicates that each of the AI models participating in the test meets or does not meet the performance requirement, indicates an AI model that meets the performance requirement and that is in the AI models participating in the test, indicates an AI model that does not meet the performance requirement and that is in the AI models participating in the test, indicates an AI model to be subsequently used by the terminal, or indicates the terminal to perform a corresponding operation in a non-AI manner.

According to the foregoing method, the terminal reports the test result to the network device. The network device determines, based on the test result, whether the AI models participating in the performance test meets the performance requirement, and sends the first indication information based on performance information of the AI model. In this design, in an aspect, the network device evaluates performance of the AI model, so that the network device can conveniently manage and schedule the AI model in the terminal in a unified manner. In another aspect, the terminal directly reports the test result to the network device without another evaluation operation. This may reduce power consumption of the terminal.

In another design, specifically, the terminal evaluates the AI model deployed by the terminal. In this design, the network device may need to indicate a performance requirement for the AI model to the terminal. For example, the terminal may receive second indication information from the network device. The second indication information indicates the performance requirement for the AI model. Alternatively, the performance requirement for the AI model is specified in a protocol. The terminal may test the AI model, and determine a test result based on the performance requirement for the AI model. The test result is referred to as a second test result. The second test result indicates that each of the AI models participating in the test meets or does not meet the performance requirement, indicates an AI model that meets the performance requirement and that is in the AI models participating in the test, indicates an AI model that does not meet the performance requirement and that is in the AI models participating in the test, indicates an AI model to be subsequently used by the terminal, or indicates the terminal to perform a subsequent operation in a non-AI manner.

According to the foregoing method, the terminal directly evaluates performance of the AI model, and reports an evaluation result, namely, the second test result, to the network device. Therefore, an operation process of the network device is reduced.

In a design, the method further includes: sending request information to the network device. The request information is used to request the first information, or is used to request to test the AI model. Optionally, the request information includes indication information of an input format of the AI models participating in the test.

According to the foregoing method, the terminal notifies, by using the request information, the network device of the input format of the AI models participating in the test. The network device may configure, for the terminal based on the input format of the AI model, test data that matches the format. Subsequently, the terminal may test the model by using the configured test data, and does not need to perform format conversion on training data. Therefore, the power consumption of the terminal is reduced.

According to a second aspect, a model test method is provided. The method is performed by the network device corresponding to the first aspect. For beneficial effects, refer to the first aspect. Details are not described again. The method is performed by the network device, or may be performed by a component (a processor, a chip, or another component) disposed in the network device, a software module, or the like. The method includes: sending first information to a terminal, where the first information is used to determine at least one test set; and receiving second information from the terminal, where the second information indicates a test result of an AI model, and the test result corresponds to the at least one test set.

For descriptions of the first information, the second information, and the test result, refer to the first aspect. Details are not described again.

In a design, the method further includes: receiving request information from the terminal. The request information is used to request the first information, or is used to request to test the AI model. Optionally, the request information includes indication information of an input format of an AI models participating in a test.

According to a third aspect, an apparatus is provided. For beneficial effects, refer to the descriptions of the first aspect. The apparatus may be a terminal, an apparatus disposed in a terminal, or an apparatus that can be used together with a terminal. In a design, the apparatus includes units in a one-to-one correspondence with the method/operation/step/actions described in the first aspect. The units may be implemented by a hardware circuit, software, or a combination of a hardware circuit and software.

For example, the apparatus may include a processing unit and a communication unit. The processing unit and the communication unit may perform corresponding functions in any design example of the first aspect.

Specifically, the communication unit is configured to receive first information from a network device. The first information indicates at least one test set.

The processing unit is configured to test an AI model based on the at least one test set, to obtain a test result.

The communication unit is further configured to send second information to the network device. The second information indicates the test result of the AI model. For specific execution processes of the processing unit and the communication unit, refer to the first aspect. Details are not described herein again.

For example, the apparatus includes a processor, configured to implement the method described in the first aspect. The apparatus may further include a memory, configured to store instructions and/or data. The memory is coupled to the processor. When executing program instructions stored in the memory, the processor may implement the method described in the first aspect. The apparatus may further include a communication interface. The communication interface is used by the apparatus to communicate with another device. For example, the communication interface may be a transceiver, a circuit, a bus, a module, a pin, or another type of communication interface, and the another device may be a network device or the like. In a possible design, the apparatus includes:

a memory, configured to store program instructions;
a communication interface, configured to: receive first information from a network device, where the first information indicates at least one test set; and send second information to the network device, where the second information indicates a test result of an AI model; and
a processor, configured to test the artificial intelligence AI model based on the at least one test set, to obtain the test result.

For specific execution processes of the communication interface and the processor, refer to the descriptions in the first aspect. Details are not described again.

According to a fourth aspect, an apparatus is provided. For beneficial effects, refer to the descriptions in the second aspect. The apparatus may be a network device, an apparatus disposed in a network device, or an apparatus that can be used together with the network device. In a design, the apparatus includes units in a one-to-one correspondence with the method/operation/step/actions described in the second aspect. The unit may be a hardware circuit, software, or a combination of a hardware circuit and software.

For example, the apparatus may include a processing unit and a communication unit. The processing unit and the communication unit may perform corresponding functions in any design example of the second aspect.

Specifically, the processing unit is configured to determine at least one test set.

The communication unit is configured to: send first information to a terminal, where the first information is used to determine the at least one test set; and receive second information from the terminal, where the second information indicates a test result of an AI model, and the test result corresponds to the at least one test set.

For specific execution processes of the processing unit and the communication unit, refer to the second aspect. Details are not described herein again.

For example, the apparatus includes a processor, configured to implement the method described in the second aspect. The apparatus may further include a memory, configured to store instructions and/or data. The memory is coupled to the processor. When executing program instructions stored in the memory, the processor may implement the method described in the second aspect. The apparatus may further include a communication interface. The communication interface is used by the apparatus to communicate with another device. For example, the communication interface may be a transceiver, a circuit, a bus, a module, a pin, or another type of communication interface, and the another device may be a terminal or the like. In a possible design, the apparatus includes:

a memory, configured to store program instructions;
a processor, configured to determine at least one test set; and
a communication interface, configured to: send first information to a terminal, where the first information is used to determine at least one test set; and receive second information from the terminal, where the second information indicates a test result of an AI model, and the test result corresponds to the at least one test set.

For specific execution processes of the communication interface and the processor, refer to the descriptions in the second aspect. Details are not described again.

According to a fifth aspect, this application further provides a computer-readable storage medium, including instructions. When the instructions are run on a computer, the computer is enabled to perform the method according to the first aspect or the second aspect.

According to a sixth aspect, this application further provides a chip system. The chip system includes a processor, and may further include a memory, configured to implement the method according to the first aspect or the second aspect. The chip system may include a chip, or may include a chip and another discrete component.

According to a seventh aspect, this application further provides a computer program product, including instructions. When the instructions are run on a computer, the computer is enabled to perform the method according to the first aspect or the second aspect.

According to an eighth aspect, this application further provides a system. The system includes the apparatus according to the third aspect and the apparatus according to the fourth aspect.

**BRIEF DESCRIPTION OF DRAWINGS**

FIG. 1 is a schematic diagram of a communication system according to this application;
FIG. 2a is a schematic diagram of a neuron according to this application;
FIG. 2b is a schematic diagram of a neural network according to this application;
FIG. 2c is a schematic diagram of an AI model according to this application;
FIG. 3a and FIG. 3b each are a schematic diagram of a network architecture according to this application;
FIG. 4 is a schematic diagram of machine learning according to this application;
FIG. 5 to FIG. 8 each are a flowchart of a model test according to this application; and

FIG. 9 and FIG. 10 each are a schematic diagram of a communication apparatus according to this application.

## DESCRIPTION OF EMBODIMENTS

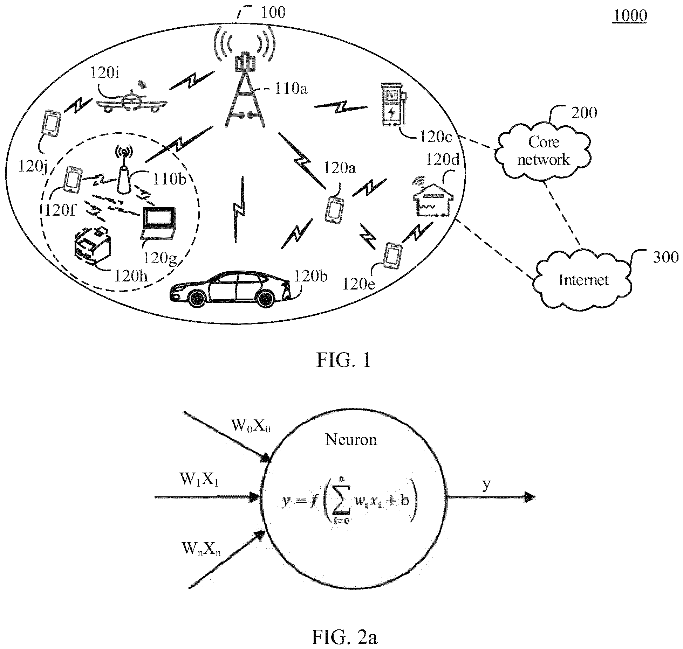

FIG. 1 is a schematic diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to an access network device in a wireless manner, and the access network device is connected to the core network in a wireless or wired manner. A core network device and the access network device may be independent and different physical devices, a function of a core network device and a logical function of the access network device may be integrated into a same physical device, or some functions of a core network device and some functions of the access network device may be integrated into one physical device. A wired or wireless manner may be used for a connection between terminals and a connection between access network devices. FIG. 1 is only a schematic diagram. The communication system may further include another network device, for example, may further include a wireless relay device, a wireless backhaul device, and the like. This is not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that completes some functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node or a donor node. A specific technology and a specific device form used by the access network device are not limited in this application.

In this application, an apparatus configured to implement a function of the access network device may be an access network device, or may be an apparatus that can support the access network device in implementing the function, for example, a chip system, a hardware circuit, a software module, or a combination of a hardware circuit and a software module. The apparatus may be installed in the access network device or may be used in a manner of matching the access network device. In this application, the chip system may include a chip, or may include a chip and another discrete component. For ease of description, the technical solutions provided in this application are described below by using an example in which the apparatus configured to implement the function of the access network device is the access network device and the access network device is a base station.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, where the artificial intelligence layer is used for transmission of data related to an AI function.

(2) Central unit (central unit, CU) and distributed unit (distributed unit, DU)

An access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be classified based on a protocol layer of a wireless network. For example, functions of a PDCP layer and a protocol layer above the PDCP layer are configured in the CU, and functions of protocol layers below the PDCP layer (for example, an RLC layer, a MAC layer, and the like) are configured in the DU. For another example, a function of a protocol layer above the PDCP layer is configured in the CU, and functions of the PDCP layer and a protocol layer below the PDCP layer are configured in the DU. This is not limited.

The classification of processing functions of the CU and the DU based on the protocol layer is merely an example, and there may be other classification. For example, the CU or the DU may have functions of more protocol layers through classification. For another example, the CU or the DU may have some processing functions of the protocol layer through classification. In a design, some functions of the RLC layer and a function of a protocol layer above the RLC layer are configured in the CU, and a remaining function of the RLC layer and a function of a protocol layer below the RLC layer are configured in the DU. In another design, classification of functions of the CU or the DU may alternatively be performed based on a service type or another system requirement. For example, classification may be performed based on a latency. A function whose processing time needs to satisfy a latency requirement is configured in the DU, and a function whose processing time does not need to satisfy the latency requirement are configured in the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be classified at a physical layer (physical layer, PHY). For example, the DU may implement higher-layer functions of the PHY layer, and the RU may implement lower-layer functions of the PHY layer. For sending, functions of the PHY layer may include at least one of the following functions: cyclic redundancy check (cyclic redundancy check, CRC) code adding, channel coding, rate matching, scrambling, modulation, layer mapping, precoding, resource mapping, physical antenna mapping, and/or radio frequency sending. For receiving, functions of the PHY layer may include at least one of the following functions: CRC check, channel decoding, rate de-matching, descrambling, demodulation, layer de-mapping, channel detection, resource de-mapping, physical antenna de-mapping, and/or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency function. For example, the higher-layer functions of the PHY layer may include CRC code adding, channel coding, rate matching, scrambling, modulation, and layer mapping, and the lower-layer function of the PHY layer may include precoding, resource mapping, physical antenna mapping, and radio frequency sending functions. Alternatively, the higher-layer functions of the PHY layer may include CRC code adding, channel coding, rate matching, scrambling, modulation, layer mapping, and precoding, and the lower-layer functions of the PHY layer may include resource mapping, physical antenna mapping, and radio frequency sending functions. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and radio frequency receiving functions. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and radio frequency receiving functions.

For example, a function of the CU may be implemented by one entity, or may be implemented by different entities. For example, the function of the CU may be further divided. In other words, a control plane and a user plane are separated and implemented by using different entities: a control plane CU entity (namely, a CU-CP entity) and a user plane CU entity (namely, a CU-UP entity). The CU-CP entity and the CU-UP entity may be coupled to the DU, to jointly complete a function of an access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by the modules also fall within the protection scope of this disclosure.

In a possible implementation, the access network device includes the CU-CP, the CU-UP, the DU, and the RU. For example, this application is executed by the DU, is executed by the DU and the RU, is executed by the CU-CP, the DU, and the RU, or is executed by the CU-UP, the DU, and the RU. This is not limited. Methods performed by the modules also fall within the protection scope of this application.

The terminal may also be referred to as a terminal device, user equipment (user equipment, UE), a mobile station, a mobile terminal, or the like. The terminal may be widely used in communication in various scenarios, for example, including but not limited to at least one of the following scenarios: a device-to-device (device-to-device, D2D) scenario, a vehicle-to-everything (vehicle-to-everything, V2X) scenario, a machine-type communication (machine-type communication, MTC) scenario, an internet of things (internet of things, IOT) scenario, a virtual reality scenario, an augmented reality scenario, an industrial control scenario, an automatic driving scenario, a telemedicine scenario, a smart grid scenario, a smart furniture scenario, a smart office scenario, a smart wearable scenario, a smart transportation scenario, a smart city scenario, or the like. The terminal may be a mobile phone, a tablet computer, a computer having a wireless transceiver function, a wearable device, a vehicle, an unmanned aerial vehicle, a helicopter, an airplane, a ship, a robot, a robot arm, a smart home device, or the like. A specific technology and a specific device form that are used by the terminal are not limited in this application.

In this application, an apparatus configured to implement a function of the terminal may be a terminal, or may be an apparatus that can support the terminal in implementing the function, for example, a chip system, a hardware circuit, a software module, or a combination of a hardware circuit and a software module. The apparatus may be installed in the terminal or may be used in a manner of matching the terminal. For ease of description, the technical solutions provided in this application are described below by using an example in which the apparatus configured to implement the function of the terminal is the terminal.

The base station and the terminal may be fixed or movable. The base station and/or the terminal may be deployed on the land, including an indoor device, an outdoor device, a handheld device, or a vehicle-mounted device, may be deployed on the water, or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on the land. Alternatively, the base station is deployed on the land, and the terminal is deployed on the water. Examples are not described one by one.

Roles of the base station and the terminal may be relative. For example, a helicopter or an unmanned aerial vehicle 120i in FIG. 1 may be configured as a mobile base station. For a terminal 120j that accesses the radio access network 100 via 120i, a terminal 120i is a base station. However, for a base station 110a, 120i is a terminal. In other words, 110a and 120i communicate with each other via a radio air interface protocol. 110a and 120i may alternatively communicate with each other via an interface protocol between base stations. In this case, 120i is also a base station relative to 110a. Therefore, both the base station and the terminal may be collectively referred to as communication apparatuses, 110a and 110b in FIG. 1 each may be referred to as a communication apparatus having a base station function, and 120a to 120j in FIG. 1 each may be referred to as a communication apparatus having a terminal function.

Communication between the base station and the terminal, between base stations, or between terminals may be performed by using a licensed spectrum, an unlicensed spectrum, both a licensed spectrum and an unlicensed spectrum, a spectrum below 6 gigahertz (gigahertz, GHz), a spectrum above 6 GHz, or both a spectrum below 6 GHz and a spectrum above 6 GHz. A spectrum resource used for wireless communication is not limited in this application.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal may establish a wireless connection to a cell controlled by the base station. The cell that establishes the wireless connection to the terminal is referred to as a serving cell of the terminal. When communicating with the serving cell, the terminal may be further interfered by a signal from a neighboring cell.

In this application, an independent network element (for example, referred to as an AI network element or an AI node) may be introduced into the communication system shown in FIG. 1, to implement an AI-related operation. The AI network element may be directly connected to the access network device in the communication system, or may be indirectly connected to the access network device via a third-party network element. The third-party network element may be a core network element such as an authentication management function (authentication management function, AMF) network element or a user plane function (user plane function, UPF) network element. Alternatively, an AI function, an AI module, or an AI entity may be configured in another network element in the communication system, to implement an AI-related operation. For example, the another network element may be an access network device (such as a gNB), a core network device, a network management device (operation, administration and maintenance, OAM), or the like. In this case, a network element that performs the AI-related operation is a network element equipped with a built-in AI function. In this application, an example in which another network element is equipped with a built-in AI function is used for description.

In this application, the OAM is configured to operate, manage, and/or maintain the core network device, and/or is configured to operate, manage, and/or maintain the access network device.

In this application, an AI model is a specific method for implementing the AI function, and the AI model represents a mapping relationship between an input and an output of the model. The AI model may be a neural network or another machine learning model. The AI model may be referred to as a model for short. The AI-related operation may include at least one of the following: data collection, model training, model information releasing, model inference (model inference), inference result releasing, or the like.

A neural network is used as an example. The neural network is a specific implementation form of a machine learning technology. According to the universal approximation theorem, the neural network can approximate any continuous function in theory, so that the neural network has a capability of learning any mapping. In a conventional communication system, a communication module needs to be designed with rich expert knowledge. However, a neural network-based deep learning communication system can automatically discover an implicit pattern structure from a large quantity of data sets, establish a mapping relationship between data, and obtain performance better than that of a conventional modeling method.

The idea of the neural network comes from a neuron structure of brain tissue. Each neuron performs a weighted summation operation on an input value of the neuron, and outputs a result of the weighted summation through an activation function. FIG. 2a is a schematic diagram of a neuron structure. It is assumed that an input of a neuron is $x = [x_0, x_1, \dots, x_n]$, a weight corresponding to each input is $w = [w, w_1, \dots, w_n]$, and an offset of weighted summation is b. An activation function may have diversified forms. It is assumed that an activation function of a neuron is $y = f(z) = \max(0, z)$. In this case, an output of the neuron is $y = f\left(\sum_{i=0}^{i=n} w_i * x_i + b\right) = \max\left(0, \sum_{i=0}^{i=n} w_i * x_i + b\right)$. For another example, if an activation function of a neuron is $y = f(z) = z$, an output of the neuron is $y = f\left(\sum_{i=0}^{i=n} w_i * x_i + b\right) = \sum_{i=0}^{i=n} w_i * x_i + b$. b may be any possible value such as a decimal, an integer (including 0, a positive integer, a negative integer, or the like), or a complex number. Activation functions of different neurons in the neural network may be the same or different.

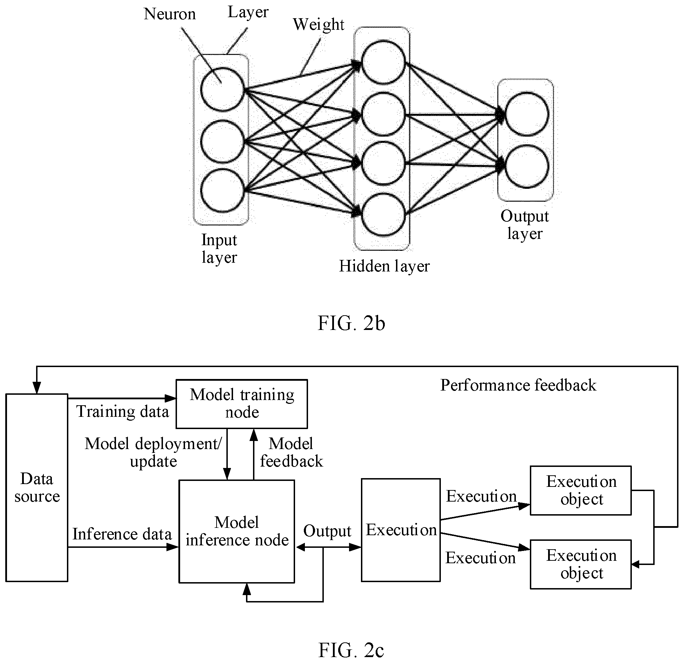

The neural network generally includes a multilayer structure, and each layer may include one or more neurons. Increasing a depth and/or a width of the neural network can improve an expression capability of the neural network, and provide more powerful information extraction and abstract modeling capabilities for a complex system. The depth of the neural network may indicate a quantity of layers included in the neural network, and a quantity of neurons included in each layer may be referred to as the width of the layer. FIG. 2b is a schematic diagram of a layer relationship of a neural network. In an implementation, the neural network includes an input layer and an output layer. The input layer of the neural network performs neuron processing on a received input, and then transfers a result to the output layer, and the output layer obtains an output result of the neural network. In another implementation, the neural network includes an input layer, a hidden layer, and an output layer. The input layer of the neural network performs neuron processing on a received input, and transfers a result to an intermediate hidden layer. The hidden layer then transfers a calculation result to the output layer or an adjacent hidden layer. Finally, the output layer obtains an output result of the neural network. One neural network may include one or more hidden layers that are sequentially connected. This is not limited. In a training process of the neural network, a loss function may be defined. The loss function describes a gap or a difference between an output value of the neural network and an ideal target value. A specific form of the loss function is not limited in this application. The training process of the neural network is a process of adjusting a neural network parameter, such as a quantity of layers and a width of the neural network, a weight of a neuron, a parameter in an activation function of the neuron, and/or the like, so that a value of the loss function is less than a threshold or meets a target requirement.

FIG. 2c is a schematic diagram of an application framework of AI. A data source (data source) is configured to store training data and inference data. A model training node (model training host) analyzes or trains training data (training data) provided by the data source to obtain an AI model, and deploys the AI model in a model inference node (model inference host). Optionally, the model training node may further update the AI model deployed in the model inference node. The model inference node may further feed back related information about the deployed model to the model training node, so that the model training node performs optimization, updating, or the like on the deployed AI model.

The AI model represents a mapping relationship between an input and an output of the model. Obtaining an AI model through learning by the model training node is equivalent to obtaining the mapping relationship between the input and the output of the model through learning by the model training node by using the training data. The model inference node uses the AI model to perform inference based on inference data provided by the data source, to obtain an inference result. The method may also be described as that the model inference node inputs the inference data to the AI model, and obtains an output by using the AI model. The output is the inference result. The inference result may indicate a configuration parameter used (executed) by an execution object, and/or an operation performed by the execution object. The inference result may be uniformly planned by an execution (actor) entity, and sent to one or more execution objects (for example, network entities) for execution.

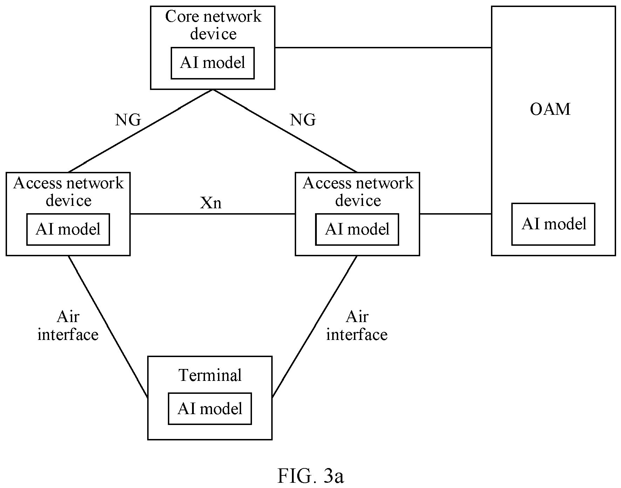

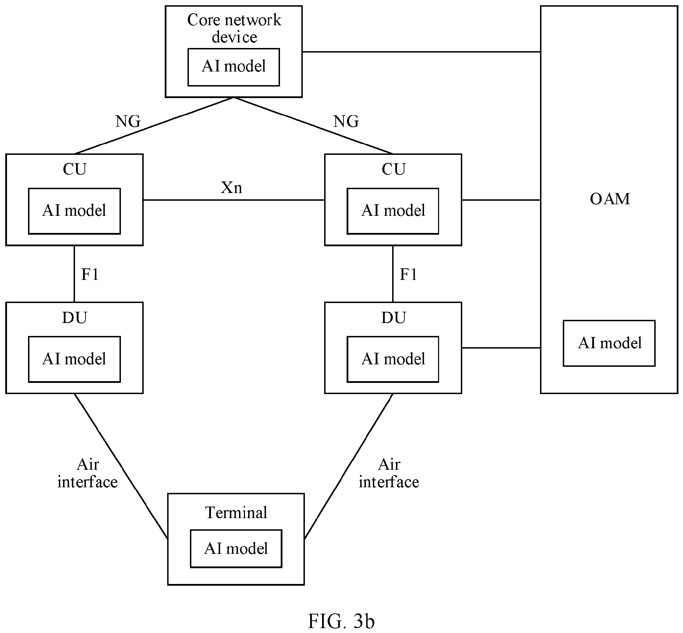

FIG. 3a and FIG. 3b each are a schematic diagram of a network architecture according to this application. An AI model may be deployed in at least one of a core network device, an access network device, a terminal, OAM, or the like, and a corresponding function is implemented by using the AI model. In this application, AI models deployed in different nodes are the same or different, and that the models are different includes at least one of the following differences. Structural parameters of the models are different. For example, quantities of layers and/or weights of the models are different; input parameters of the models are different; or output parameters of the models are different. That the input parameters of the models and/or the output parameters of the models are different may be further described as that functions of the models are different. Different from FIG. 3a, in FIG. 3b, functions of the access network device are split into a CU and a DU. Optionally, one or more AI models may be deployed in the CU, and/or one or more AI models may be deployed in the DU. Optionally, the CU in FIG. 3b may be further split into a CU-CP and a CU-UP. Optionally, one or more AI models may be deployed in the CU-CP, and/or one or more AI models may be deployed in the CU-UP. Optionally, in FIG. 3a or FIG. 3b, OAM of the access network device and OAM of the core network device may be separately deployed.

In a conventional machine learning field, model training and model testing are usually completed by one device, and another device does not need to perform management and control. However, in a wireless network, there are a plurality of devices, and usually, one device (for example, a base station, a core network device, or OAM) needs to manage and control another device (for example, a base station or a terminal). For example, when the terminal uses an AI model to process an operation related to a network-side device, the network-side device needs to evaluate performance of the AI model used by the terminal, and determine whether the terminal can use the AI model to communicate with the network-side device. Particularly, when the AI model used by the terminal needs to be used together with some operations or an AI model of the network side device, if the network-side device does not evaluate, manage, and control the AI model used by the terminal at all, normal communication between the two parties may fail, and even communication of another terminal is affected. However, in the current wireless network, there is no test method for the AI model, to evaluate, manage, and control the used AI model.

In a model test method provided in this application, a first device may test an AI model deployed in a second device. The first device and the second device are not limited in this application. For example, the first device is an access network device, the second device is a terminal, and the access network device may test an AI model in the terminal. Alternatively, the first device is OAM, the second device is a terminal, and the OAM may test an AI model in the terminal. Alternatively, the first device is a core network device, the second device is a terminal, and the core network device may test an AI model in the terminal. Alternatively, the first device is a core network device, the second device is an access network device, and the core network device may test an AI model deployed in the access network device. In subsequent specific descriptions of the model test method, an example in which the first device is an access network device, the second device is a terminal, and a base station tests an AI model deployed in the terminal is used for description. When the first device and the second device cannot directly communicate with each other, a third device may assist the first device and the second device in communication between the first device and the second device. For example, the first device is a core network device or OAM, and the second device is a terminal. In this case, the first device may send a signal or information to the second device through forwarding by the third device (for example, an access network device), and the second device may send a signal or information to the first device through forwarding by the third device. The forwarding may be transparent transmission, or processing (for example, adding a header, segmenting, or cascading) the to-be-forwarded signal or information and then forwarding processed signal or information.

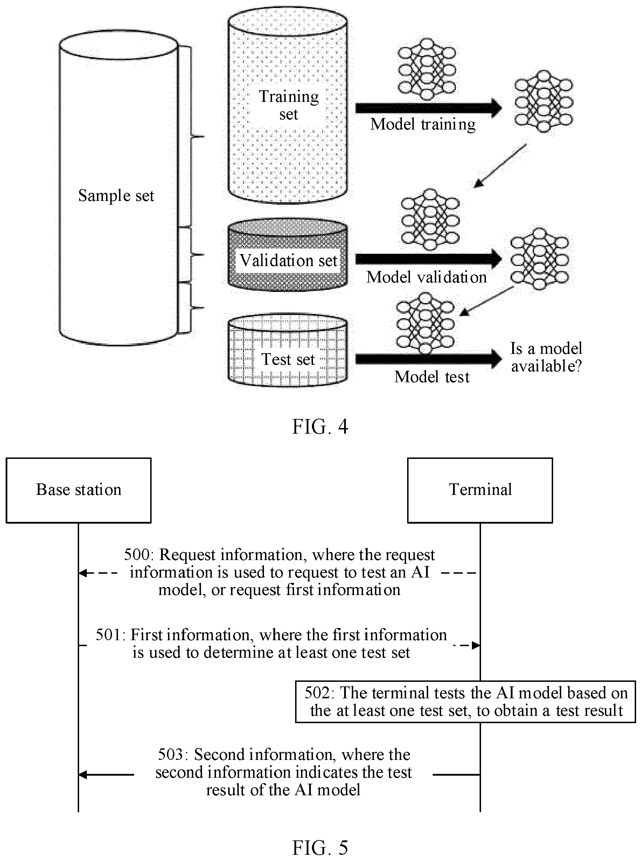

In a design, as shown in FIG. 4, a machine learning process includes the following steps.

1. Perform division on a sample set, to obtain a training set, a validation set, and a test set.

For example, a division method includes a hold-out method, a cross-validation method, a bootstrapping method, or the like. The hold-out method is to divide the sample set into a plurality of mutually exclusive sets, and the plurality of mutually exclusive sets are referred to as a training set, a validation set, and a test set. The cross-validation method is to try to use different training sets, validation sets, and test sets that are obtained through division to perform a plurality of groups of different training, validation, testing, and the like on an AI model, to deal with problems such as a single test result being excessively one-sided and different training data. The bootstrapping method is to perform sampling with replacement on the sample set for n times to obtain n samples, and then use the n samples as a training set, where n is a positive integer. In an implementation, a part of the training set may be obtained through random division as the validation set, and the remaining part is used as the training set. Because the sampling is sampling with replacement, there is a high probability that a part of the n samples are duplicate. In addition, a part of samples in the entire sample set are not sampled, and the part of samples that are not sampled are used as the test set. It should be noted that the training set, the validation set, and the test set may be from one sample set, different sample sets, or the like. For example, the training set and the validation set are from one sample set, and the test set is from another sample set.

There is no intersection between any two of the training set, the validation set, and the test set. However, a case that there is an intersection between any two of the training set, the validation set, and the test set is not excluded in this application. The training set is a set of training samples, and each training sample is one input in a model training process. The validation set is a set of validation samples. Each validation sample is one input in a model validation process. The test set is a set of test samples. Each test sample is one input in a model test process.

2. Perform model training by using the training set, to obtain an AI model, where this process may be referred to as model training.

Model training is an important part of machine learning. The essence of machine learning is to learn some features of the training sample from the training sample, so that a difference between an output of the AI model and an ideal target value is minimized through training of the training set. Usually, even if a same network structure is used, weights and/or outputs of AI models trained by using different training sets may be different. Therefore, to some extent, performance of the AI model is determined by composition and selection of the training set.

3. Validate the AI model by using the validation set, where this process may be referred to as model validation.

Model validation is usually performed in the model training process. For example, each time one or more times of iterative (EPOCH) training is performed on the model, the validation set may be used to validate the current model, to monitor a model training status, for example, to validate whether the model is under-fitted, overfitted, converged, or the like, and determine whether to end the training. Optionally, in the model validation process, a hyperparameter of the model may be further adjusted. The hyperparameter may be at least one of the following parameters of the model: a quantity of layers of a neural network, a quantity of neurons, an activation function, a loss function, or the like.

4. Test the AI model by using the test set, where this process may be referred to as model test.

After the model training is completed, the test set may be used to test a trained AI model, for example, evaluate a generalization capability of the AI model, determine whether performance of the AI model meets a requirement, whether the AI model is available, or the like.

In the current wireless network, there is no available AI model test procedure, to achieve an objective that a first device (for example, a base station) evaluates, manages, and controls an AI model used by a second device (for example, a terminal). In this application, a model test method is provided. In the method, a base station may test an AI model used by a terminal, so that the base station evaluates, manages, and controls the AI model used by the terminal. As shown in FIG. 5, a procedure of a model test method is provided, including at least the following steps.

Step 500: A terminal sends request information to a base station, where the request information is used to request to test an AI model, or is used to request first information in step 501.

Before step 500, the terminal obtains at least one AI models participating in the test. The AI models participating in the test may be obtained by the terminal through training, or may be sent by the base station to the terminal, or may be downloaded by the terminal from another node, or the like. This is not limited.

Specifically, the terminal may send the request information in step 500 to the base station after obtaining the at least one AI models participating in the test, or after the terminal is ready for the test and can test the model.

In a design, the request information may include indication information of an input format of the AI models participating in the test. The base station may determine a format of a test sample in a test set based on the input format of the AI models participating in the test. For example, the base station converts the format of the test sample in the test set based on the input format of the AI model. A converted format of the test sample meets a requirement for the input format of the AI model. Alternatively, the base station may select, from a plurality of test sets based on the input format of the AI models participating in the test, a test set that meets a requirement, or the like. For example, there are a plurality of test sets, and formats of test samples in different test sets may be different. The base station may select, from the plurality of test sets, a test set that includes a test sample whose format meets the requirement for the input format of the AI model.

Alternatively, whether the request information includes indication information of an input format of the AI models participating in the test is not limited. In other words, the request information may include the indication information of the input format of the AI models participating in the test, or may not include the indication information of the input format of the AI models participating in the test. The base station may send, to the terminal, indication information of a test set including a test sample in any format, and the terminal converts the test sample in the test set into a test sample that meets the input format of the AI models participating in the test. Alternatively, a format of the test sample may be predefined, and the AI models participating in the test is designed, trained, or the like based on the predefined format when being generated. The format of the test sample included in the test set sent by the base station to the terminal needs to meet the input format of the AI models participating in the test.

Optionally, the input format of the AI model may include a type of input data of the AI model, a dimension of the input data, and/or the like. The type of the input data is content described in the input data. For example, the type of the input data may be a radio channel, a channel feature, a received signal, received signal power, or the like. The dimension of the input data is a specific expression form of the input data. For example, the dimension of the input data may be one or more of a time domain dimension, a frequency domain dimension, a space domain dimension, a beam domain dimension, a latency domain dimension, and the like. The dimension of the input data further includes a size of the input data in each dimension. For example, if the size of the input data in the time domain dimension is 2, and the size of the input data in the frequency domain dimension is 72, the input data is a matrix of 2*72. The dimension of the input data further includes a unit of the input data in each dimension. For example, the unit of the input data in the time domain dimension may be a slot, an orthogonal frequency division multiplexing (orthogonal frequency division multiplexing, OFDM) symbol, or the like, and the unit of the input data in the frequency domain dimension may be a subcarrier, a resource block (resource block, RB), or the like.

Step 501: The base station sends the first information to the terminal, where the first information is used to determine at least one test set.

For example, the base station may send the first information to the terminal in T1 time units after receiving the request information sent by the terminal.

In a design, the first information includes indication information of the at least one test set. For example, the base station sends the at least one test set to the terminal. The test set may be generated by the base station, or may be from another device. For example, the test set is from a core network device, OAM, remote intelligent communication, a wireless intelligent controller, an AI node, another device, or the like. Alternatively, the base station sends the indication information of the at least one test set to the terminal. The indication information indicates the terminal to select at least one test set from a plurality of predefined test sets to perform a test. The plurality of predefined test sets may be stored in the terminal (for example, as specified in a protocol), or stored in a third-party node, where the third-party node may be referred to as a test data management node. Optionally, the first information may further include network address information of the third-party node or test data. Optionally, for security consideration, the third-party node may not be randomly accessed. The first information may further include authorization information for accessing the third-party node. The authorization information of the third-party node may be referred to as test set access authorization information.

In another design, the first information includes a reference signal. The terminal determines the at least one test set based on the reference signal. Alternatively, the first information includes configuration information of a reference signal. The terminal receives the reference signal based on the configuration information of the reference signal, and determines the at least one test set based on the received reference signal. For example, the base station configures a reference signal pattern for the terminal, and notifies the terminal that a reference signal of the pattern is used by the terminal to obtain a test set related to a radio channel online. When detecting the reference signal of the pattern, the terminal performs channel estimation on the reference signal, to obtain the test set related to the radio channel, and the like. In this design, because the obtained test set is the test set related to the radio channel, an AI model related to the radio channel can be tested by using the test set. Alternatively, the first information includes a downlink data signal sent on a predefined downlink channel. For example, the base station configures a downlink channel for the terminal, where the downlink channel is predefined or known to the terminal. The base station notifies the terminal that the downlink channel is used to obtain a test set online. In this case, the terminal receives the downlink data signal on the downlink channel, and determines at least one test set based on the downlink data signal.

Step 502: The terminal tests the AI model based on the at least one test set, to obtain a test result.

In this application, the AI model is a model that implements a function in an AI manner, for example, predicts a movement track of the terminal, network load, or the like. A name of the AI model is not limited. For example, the AI model may be referred to as a model for short, or may be referred to as a first model, a neural network model, or the like. The AI model represents a mapping relationship between an input and an output of the model. As shown in FIG. 2c, obtaining an AI model through learning by a model training node is equivalent to obtaining a mapping relationship between an input and an output of the model through learning by the model training node by using training data. A model inference node uses the AI model to perform inference based on inference data provided by a data source, to obtain an inference result. In this application, each model including a parameter that can be trained may be referred to as an AI model, and a deep neural network is a typical AI model. Specifically, the deep neural network includes a multi-layer perceptron (multi-layer perceptron, MLP), a convolutional neural network (convolutional neural network, CNN), a recurrent neural network (recurrent neural network, RNN), and the like.

In this application, there are one or more AI models participating in the test. After obtaining the at least one test set, the terminal tests one or more AI models by using the test set. In an implementation, each AI model corresponds to a same test set. For example, for each AI models participating in the test, the terminal tests the AI model once by using each of the at least one test set indicated by the base station. For example, there are N AI models participating in the test, the at least one test set includes M test sets, and both N and M are integers. Each of the N AI models corresponds to the M test sets. In other words, each AI model is tested by using the M test sets separately. One test result may be obtained by inputting any one of the M test sets into any one of the N AI models, and M*N test results may be obtained by separately inputting the M test sets into the N AI models. Alternatively, in another implementation, AI models correspond to different tests. For example, three AI models are respectively referred to as a first AI model, a second AI model, and a third AI model. Three test sets are referred to as a test set 1 to a test set 3. The first AI model may be tested by using the test set 1, the second AI model may be tested by using the test set 2, and the third AI model may be tested by using the test set 3. In this case, the base station may additionally notify the terminal of a to-be-tested AI model corresponding to each test set. For example, a correspondence between the test set and the AI model is notified to the terminal in the first information in step 501. In this implementation, the terminal may notify the base station of the AI models participating in the test in advance. For example, the request information in step 500 carries indication information of the AI models participating in the test, so that the base station can allocate a same test set or different test sets to the AI models participating in the test. Alternatively, in still another implementation, some AI models in AI models participating in the test correspond to a same test set, and remaining AI models correspond to different test sets. For example, there are three AI models participating in the test: a first AI model, a second AI model, and a third AI model. The at least one test set includes five test sets: a test set 1 to a test set 5. The first AI model and the second AI model correspond to same test sets. The first AI model or the second AI model corresponds to the test set 1 to the test set 5. Test sets corresponding to the third AI model are a test set 4 and the test set 5. The test sets corresponding to the third AI model and the test sets corresponding to the first AI model or the second AI model are different. In this implementation, the base station may also need to notify the terminal of a correspondence between the AI model and the test set. Alternatively, in yet another implementation, test sets corresponding to different AI models in AI models participating in the test are partially the same (there is an intersection), but are not completely the same. The base station also needs to notify the terminal of a correspondence between the AI model and the test set. For example, test sets corresponding to a first AI model are 1 and 2, and test sets corresponding to a second AI model are 2 and 3. The test sets corresponding to the first AI model and the test sets corresponding to the second AI model are partially the same, and the test sets corresponding to the first AI model and the test sets corresponding to the second AI model include the same test set 2.

Step 503: The terminal sends second information to the base station, where the second information indicates the test result of the AI model.

Optionally, after receiving the first information in step 501, the terminal feeds back the second information to the base station in T2 time units. An uplink resource used when the terminal feeds back the second information may be indicated or configured when the base station sends the first information. In other words, the first information in step 501 may further include indication or configuration information of the uplink resource corresponding to the second information. Alternatively, an uplink resource used for feeding back the second information may be indicated or configured to the terminal in another manner, or may be predefined or preconfigured, or the like. This is not limited.

In a design, the second information indicates at least one of the following.

1. AI models participating in the test: There may be one or more AI models participating in the test. For example, the second information may include a number, an identifier, or the like of the AI models participating in the test. In this application, the second information may alternatively not indicate the AI models participating in the test. For example, when the terminal sends the request information to the base station, in other words, indicates the AI models participating in the test to the base station, and the terminal completes the test of the AI model and reports a test result to the base station, even if the second information indicating the test result does not carry the indication information of the AI models participating in the test, the base station may obtain that the test result currently reported by the terminal is the test result of the AI model that is previously requested to be tested.

2. Test result corresponding to each AI model: For the AI models participating in the test, each AI model may correspond to one or more test results. For example, when the base station indicates a plurality of test sets, one test result may be obtained by testing the AI model by using each test set. The terminal may notify the base station of a plurality of test results corresponding to the plurality of test sets. Alternatively, the terminal may select some test results from a plurality of test results, and notify the base station of the test results. Alternatively, the terminal may perform comprehensive processing on a plurality of test results to obtain a comprehensive test result, and notify the base station of the comprehensive test result.

3. Test set corresponding to each test result: As described in step 502, test sets corresponding to different AI models participating in the test may be the same or different. When the terminal reports the test result to the base station, the terminal may need to notify the base station of a test set corresponding to the test result, to be specific, a specific test set based on which the test result is generated.

The test procedure shown in FIG. 5 may be initiated by the terminal, for example, may be initiated when the terminal prepares at least one AI model, or may be initiated when the terminal is ready to use the AI model. For example, the terminal wants to predict the movement track of the terminal by using a first AI model. The first AI model may be trained by the terminal, downloaded from another node, or the like. This is not limited. Before using the first AI model, the terminal may initiate the test procedure shown in FIG. 5, and send the request information in step 501 to the base station, to request the base station to test the first AI model. After the test performed by the base station on the first AI model succeeds, the terminal predicts the movement track by using the first AI model. It may be understood that, when the terminal initiates the test procedure shown in FIG. 5, step 500 is performed. Alternatively, the test procedure shown in FIG. 5 may be initiated by the base station. For example, the base station initiates the test procedure when the base station wants to know current performance of an AI model of the terminal, or the base station may initiate the test procedure when the base station is ready to enable the terminal to use an AI model. Alternatively, for an AI model that has been tested before, after a period of time, for example, an environment changes, and the base station wants to know current performance of the AI model. In this case, the base station may indicate the terminal to test the AI model again. In this case, the base station may send indication information of a to-be-tested AI model to the terminal. For example, the indication information of the to-be-tested AI model and the test set may be carried in same information. In other words, the first information in step 501 may further indicate the to-be-tested AI model of the terminal. Alternatively, the base station may separately send one piece of information to the terminal. The information separately indicates the terminal to test an internally deployed AI model, or the like. Alternatively, the base station tests an AI model based on a time domain pattern. The time domain pattern indicates a time domain resource for testing the model. The time domain resource indicated by the time domain pattern may be periodic or aperiodic. This is not limited. The time domain pattern may be specified in a protocol or preconfigured by the base station for the terminal. It may be understood that, when the base station initiates the test procedure shown in FIG. 5, step 500 may not be performed, and the base station may directly send the first information in step 501 to the terminal.

According to the foregoing method, the base station sends, to the terminal, the first information used to determine the at least one test set. The terminal tests the AI model by using the test set indicated by the base station, to determine the test result, and notifies the base station of the test result, so that the base station knows and manages the AI model used by the terminal.

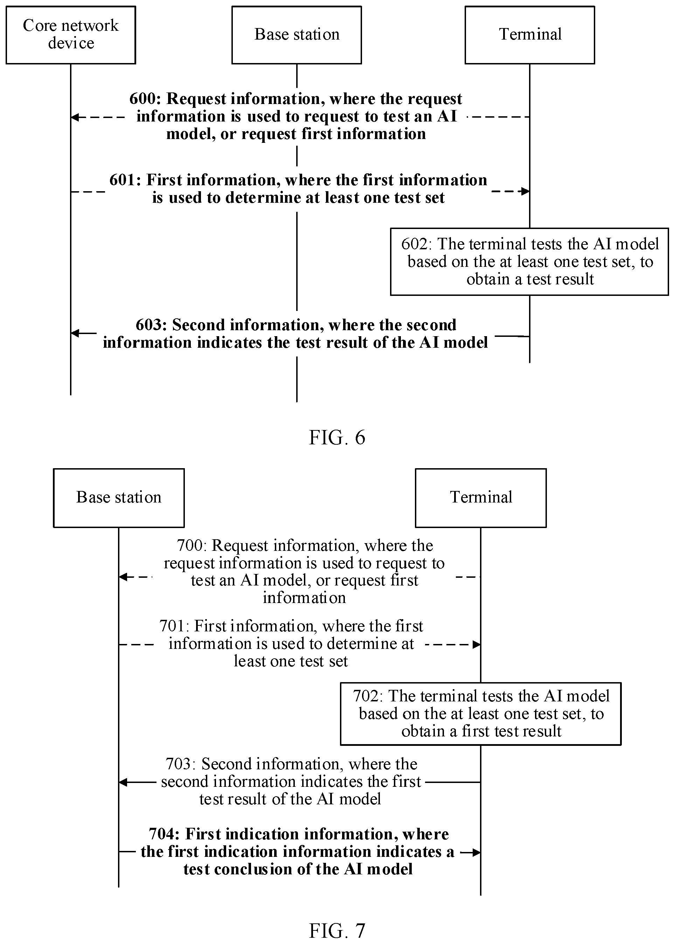

In the procedure shown in FIG. 5, an example in which the base station tests the AI model is used for description. In an implementation, the AI model may be tested by another device other than the base station. The another device may include a core network device, OAM, remote intelligent communication, a wireless intelligent controller, an AI node, or the like. The base station specifically forwards information. For example, a core network device tests an AI model deployed in a terminal. As shown in FIG. 6, a procedure of a model test method is provided, including at least the following steps.

Step 600: A terminal sends a request information to a core network device, where the request information is used to request the core network device to test an AI model, or request first information, or the like.

Specifically, the base station may first receive the request information, and then forward the request information to the core network device. Similar to the procedure shown in FIG. 5, step 500 is optional.

Step 601: The core network device sends the first information to the terminal, where the first information is used to determine at least one test set.

Specifically, the base station may first receive the first information sent by the core network device, and then forward the first information to the terminal.

Step 602: The terminal tests the AI model based on the at least one test set, to obtain a first test result.

Step 603: The terminal sends second information to the core network device, where the second information indicates the test result of the AI model.

Specifically, the base station may first receive the second information, and then forward the second information to the core network device.

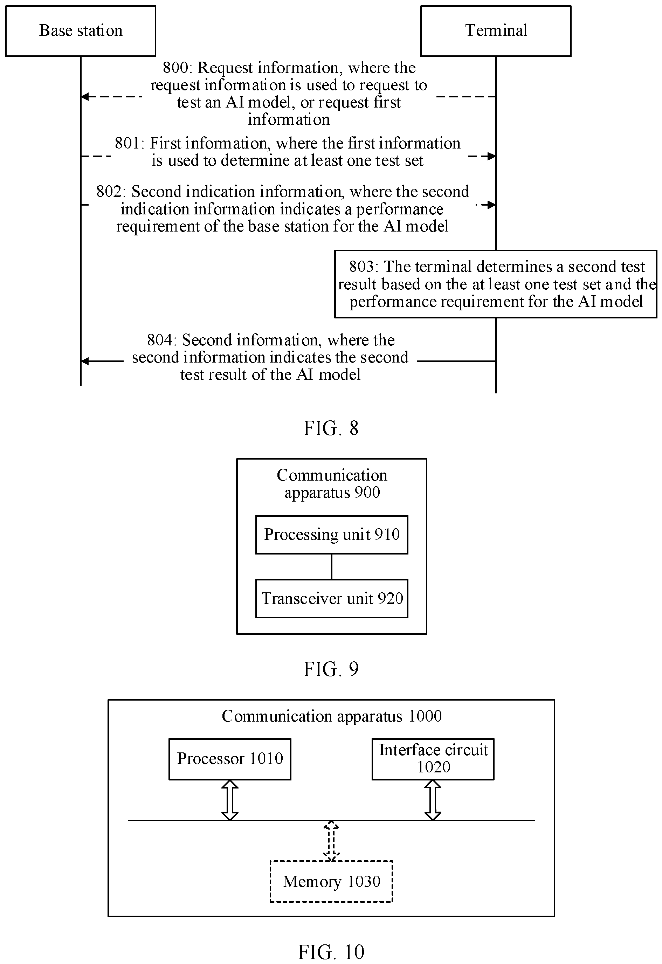

In this application, for how to determine whether each AI models participating in a test meets a performance requirement, this application provides the following two solutions. In a first solution, a terminal reports a first test result to a base station. The first test result may indicate an output of the AI model, a performance indicator determined based on an output of the AI model, or the like. The base station determines, based on the first test result, whether the AI models participating in the test meets the performance requirement, and the like. For details, refer to a procedure shown in FIG. 7. In a second solution, a base station notifies a terminal of a performance requirement for an AI model in advance. When testing the AI model, the terminal obtains a performance indicator in the foregoing first test result. The terminal determines, based on a performance indicator of each AI model and the performance requirement notified by the base station, whether each AI model meets the performance requirement, and notifies the base station that each AI model meets or does not meet the performance requirement. Information that is notified by the terminal to the base station and that indicates whether each AI model meets the performance requirement, or the like is referred to as a second test result. For details, refer to a procedure shown in FIG. 8.

In this application, when the terminal tests the AI model to obtain the first test result, and notifies the base station of the first test result, the base station may determine whether the AI model meets the requirement, and the base station notifies the terminal of a test conclusion of the AI model. As shown in FIG. 7, a procedure of a model test method is provided, including at least the following steps.

Step 700: A terminal sends request information to a base station, where the request information is used to request to test an AI model, or is used to request first information in step 701.

Similar to step 500 shown in FIG. 5, step 700 does not necessarily need to be performed, and may be selectively performed.

Step 701: The base station sends the first information to the terminal, where the first information is used to determine at least one test set.

Step 702: The terminal tests the AI model based on the at least one test set, to obtain a first test result.

For example, the terminal may use an output that is of the AI models participating in the test and that is obtained based on each test set as the first test result and feed back the first test result to the base station. In this case, the first test result indicates an output that is of the AI model and that is obtained based on the at least one test set. Alternatively, the terminal may determine a performance indicator of the AI model based on an output that is of the AI model and that is obtained based on the test set, and use the performance indicator of the AI model as the first test result of the AI model and feed back the first test result of the AI model to the base station. In this case, the first test result indicates a performance indicator of the AI model obtained by testing the AI model based on the at least one test set. A specific manner in which the terminal determines the performance indicator of the AI model based on the output that is of the AI model and that is obtained based on the test set may be predefined, configured by the base station, or the like. This is not limited. For example, the performance indicator of the AI model may include a minimum mean square error (mean square error, MSE), a normalized minimum mean square error (normalized mean square error, NMSE), a block error rate (block error rate, BLER), or the like. For example, the terminal may calculate an MSE, an NMSE, or the like based on the output that is of the AI model and that is obtained based on the test set and a label corresponding to the test set. The label may be considered as a correct output corresponding to the test set. Optionally, in this design, the first information in step 701 further indicates a label corresponding to each test set.

Step 703: The terminal sends second information to the base station, where the second information indicates the first test result of the AI model.

When receiving the second information sent by the terminal, the base station may determine, based on the first test result indicated by the second information, whether each AI models participating in the test meets a performance requirement. In a design, if the first test result fed back by the terminal indicates the output that is of the AI model and that is obtained based on the test set, in a case of supervised learning, the base station compares the output of the AI model with the corresponding label (namely, an accurate output) to determine an error between the output of the AI model and the corresponding label, and determines, based on the error between the output of the AI model and the corresponding label, whether the AI models participating in the test meets the performance requirement. For example, if the error between the output of the AI model and the corresponding label is less than a specific threshold, it is considered that the AI models participating in the test meets the performance requirement. If the error between the output of the AI model and the corresponding label is not less than a specific threshold, it is considered that the AI models participating in the test does not meet the performance requirement. In a case of unsupervised learning or reinforcement learning, there is no label corresponding to the output of the AI model, the base station determines the performance indicator of the AI model based on the output of the AI model, and determines, based on the performance indicator of the AI model, whether the AI model meets the performance requirement, and the like. For example, when the output of the AI model is a beamforming vector or a precoding matrix, the base station may calculate a corresponding signal to interference plus noise ratio (signal to interference and noise ratio, SINR) or throughput when the beamforming vector or the precoding matrix is used. If the SINR or throughput is greater than a threshold, it is considered that the AI models participating in the test meets the performance requirement. If the SINR or throughput is not greater than a threshold, it is considered that the AI models participating in the test does not meet the performance requirement. For example, the output of the AI model is a precoding matrix, and an SINR corresponding to the precoding matrix is calculated. The first test result fed back by the base station is a precoding matrix W. After a signal that is sent by using power P and the precoding matrix W passes through a channel H, the base station calculates receive power of the signal at a receiving end. An SINR is calculated based on the receive power at the receiving end and noise power.

In another design, if the first test result fed back by the terminal indicates the performance indicator that is of the AI model obtained by testing the AI model based on the at least one test set, the base station may determine, based on the performance indicator of the AI model, whether the AI model meets the performance requirement. For example, the performance indicator fed back by the terminal is an NMSE. In this case, when the NMSE is less than a threshold, the base station considers that the AI models participating in the test meets the performance requirement. When the NMSE is not less than a threshold, the base station considers that the AI models participating in the test does not meet the performance requirement.

In a case of a plurality of test sets, for each AI models participating in the test, the base station may comprehensively consider first test results that are of the AI model and that are obtained based on the plurality of test sets, to determine whether the AI model meets the performance requirement. For example, when an AI model meets a performance requirement of each of the plurality of test sets, it is considered that the AI model meets the performance requirement. Alternatively, when an AI model meets performance requirements of more than a half of the test sets, it is considered that the AI model meets the performance requirement. Alternatively, when average or weighted average performance that is of an AI model and that is obtained based on the plurality of test sets meets the performance requirement, it is considered that the AI model meets the performance requirement.

Step 704: The base station sends first indication information to the terminal. There may be one or more pieces of first indication information. This is not limited. For example, when the first indication information indicates that the AI models participating in the test meets or does not meet the performance requirement, whether each of the AI models participating in the test meets the performance requirement may be indicated by using one piece of indication information, for example, by using the following bitmap. Alternatively, for each AI models participating in the test, the base station may send one piece of indication information, to indicate whether a corresponding AI model meets the performance requirement, and the like.

Optionally, when receiving the second information in step 703, the base station may send the first indication information to the terminal in T3 time units.

In a design, the first indication information is used for a test conclusion of the AI model. For example, the first indication information may indicate that each of the AI models participating in the test meets or does not meet the performance requirement. For example, five AI models in the terminal participate in the test, and the base station finds, based on first test results of the five AI models reported by the terminal, that three AI models meet the performance requirement, and two AI models do not meet the performance requirement. In this case, the base station may notify the terminal that the three AI models meet the requirement and the two AI models do not meet the requirement. For example, a 5-bit bitmap (bitmap) may be used, and each of five bits corresponds to one AI model. If an AI model meets the performance requirement, a bit corresponding to the AI model is represented by 1 in the bitmap. If an AI model does not meet the performance requirement, a bit corresponding to the AI model is represented by 0. Meanings of 1 and 0 may be interchanged. This is not limited.

Alternatively, the first indication information indicates an AI model that meets the performance requirement and that is in the AI models participating in the test. In this case, that the base station feeds back, to the terminal, the AI model that meets the performance requirement may be pre-agreed on by the base station and the terminal, specified in a protocol, or the like. In this design, the base station may notify the terminal of the three AI models that meet the performance requirement and that are in the five AI models participating in the test. For example, numbers or identifiers of the three AI models may be notified to the terminal. When obtaining indication information of the three AI models, the terminal may consider by default that the three AI models meet the performance requirement, and the remaining two AI models participating in the test do not meet the performance requirement.

Alternatively, the first indication information may indicate an AI model that does not meet the performance requirement and that is in the AI models participating in the test. In this case, that the base station feeds back, to the terminal, the AI model that does not meet the performance requirement may be pre-agreed on by the base station and the terminal or specified in a protocol. In this design, the base station may notify the terminal of the two AI models that do not meet the performance requirement and that are in the five AI models participating in the test. When obtaining indication information of the two AI models, the terminal may consider by default that the two AI models do not meet the performance requirement, and the remaining three AI models participating in the test meet the performance requirement.

Optionally, the terminal may subsequently perform a specific operation by using the three AI models that meet the performance requirement, for example, predict a movement track of the terminal, network load, or the like. The two AI models that do not meet the performance requirement may not be used subsequently. It should be noted that the three AI models that meet the performance requirement may respectively implement different functions. For example, the three AI models may be respectively used to predict the track of the terminal, the network load, movement speed of the terminal, and the like. Alternatively, the three AI models may implement a same function. For example, all the three AI models may be used to predict the movement track of the terminal. In this case, the terminal may select one AI model from the three AI models, to perform a specific movement track prediction operation. The terminal selects, based on a principle, a specific AI model from the three AI models having the same function to perform a specific operation. The principle is not limited thereto.

In another design, the first indication information indicates an AI model to be subsequently used by the terminal or an available AI model in the AI models participating in the test, or indicates the terminal to perform a subsequent operation in a non-AI manner. For example, the base station determines, based on the first test result reported by the terminal, that there are a plurality of AI models that meet the performance requirement. Functions implemented by the plurality of AI models are the same. In this case, the base station may select one AI model from the plurality of AI models, and indicate the AI model to the terminal. The terminal directly uses the AI model to perform the subsequent operation. For example, the terminal tests five AI models. The five AI models are all used to predict the movement track of the terminal. In this case, the terminal may notify the base station of first test results of the five AI models. The base station determines, based on the first test results of the five AI models, whether the five AI models meet the performance requirement. One AI model is selected from AI models that meet the performance requirement, and the AI model is notified to the terminal, to indicate the terminal to perform subsequent movement track prediction by using the AI model. Alternatively, the base station finds that all the tested AI models do not meet the performance requirement. In this case, the base station may indicate the terminal to perform a corresponding operation in the non-AI manner.

In this application, when receiving the first indication information, the terminal may perform the subsequent operation based on the first indication information. For example, when the first indication information indicates that the AI models participating in the test does not meet the performance requirement, or indicates the terminal to perform the corresponding operation in the non-AI manner, the terminal performs the corresponding operation in the non-AI manner. For example, in a channel estimation scenario, the terminal may perform channel estimation in a non-AI manner such as a least square (least square, LS) method or a linear minimum mean square error (linear minimum mean square error, LMMSE) method. In this design, the base station may indicate the terminal to perform the corresponding operation in the non-AI manner. A specific non-AI manner used by the terminal is not limited. In another design, when the AI models participating in the test does not meet the performance requirement, the terminal may indicate, with reference to a specific application scenario, the terminal to use a specific non-AI manner to perform the subsequent operation. In this case, the first indication information indicates a specific non-AI manner. For example, in a channel state information (channel state information, CSI) feedback scenario, the base station indicates the terminal to use an R16 type 2 codebook. In this case, the terminal uses the R16 type 2 codebook to perform CSI feedback. The R16 type 2 codebook is one of codebooks used for CSI feedback in the 3rd generation partnership project (3rd generation partnership project, 3GPP) protocol. The terminal may use the R16 type 2 codebook to represent a downlink channel or an eigenvector of a downlink channel as a precoding matrix index (precoding matrix index, PMI), and feed back the PMI to the base station. The base station may restore the PMI to the downlink channel or the eigenvector of the downlink channel based on the same codebook.

Alternatively, when the first indication information indicates an AI model that should be subsequently used by the terminal, the terminal may use the AI model to perform a corresponding operation. For example, the base station indicates an AI model index to the terminal. In this case, the terminal performs a corresponding operation by using an AI model corresponding to the index. Alternatively, when the first indication information indicates whether each of the AI models participating in the test meets the performance requirement, indicates a specific AI model that meets the performance requirement, or indicates the AI model that does not meet the performance requirement, if there is at least one AI model that meets the performance requirement and that is in the AI models participating in the test, the terminal may use any AI model that meets the performance requirement to perform a corresponding operation.

According to the foregoing method, the base station sends, to the terminal, the first information used to determine the at least one test set. The terminal tests the AI model based on the test set, to obtain the first test result. In addition, the terminal sends, to the base station, the second information indicating the first test result. The base station determines, based on the first test result, whether the AI models participating in the test meets the performance requirement, and notifies the terminal that the AI models participating in the test meets or does not meet the performance requirement. Therefore, the base station can evaluate, manage, and control the AI model used by the terminal.

In this application, the base station sends the performance requirement for the AI model to the terminal. The terminal determines, based on the performance requirement that is for the AI model and that is notified by the base station and the performance indicator that is of the AI model and that is obtained through the test, whether the AI models participating in the test meets the performance requirement. As shown in FIG. 8, a procedure of a model test method is provided, including at least the following steps.

Step 800: A terminal sends a request information to a base station, where the request information is used to request to test an AI model, or is used to request first information in step 801.

Similar to step 500 shown in FIG. 5, step 800 does not necessarily need to be performed, and may be selectively performed.

Step 801: The base station sends the first information to the terminal, where the first information is used to determine at least one test set.

Step 802: The base station sends second indication information to the terminal, where the second indication information indicates a performance requirement for the AI model.

In a design, the performance requirement is related to a test set. For example, the performance requirement may be a performance requirement corresponding to the test set. The performance requirement may also be referred to as a performance indicator, a performance threshold, or the like, and may be used to determine whether the AI models participating in the test meets the performance requirement. For example, the performance requirement may be an MSE threshold, an NMSE threshold, a BLER threshold, an SINR threshold, or the like.

For a plurality of test sets, one performance requirement may be configured for each test set. Each test set may correspond to a same performance requirement or a different performance requirement. In this case, the second indication information further indicates how the terminal determines, based on the plurality of test sets, whether the AI model meets the performance requirement. For example, for one AI models participating in the test, when a performance indicator of the AI model meets a performance requirement of each of the plurality of test sets, it is considered that the AI model meets the performance requirement. Alternatively, when the AI model meets performance requirements of more than a half of the test sets, it is considered that the AI model meets the performance requirement. Alternatively, for the plurality of test sets, a comprehensive performance requirement may be configured. When comprehensive performance of the AI models participating in the test meets a requirement, it is considered that the AI model meets the performance requirement. In this case, the second indication information specifically indicates a comprehensive performance requirement for the AI model. The comprehensive performance requirement is average performance, weighted average performance, or the like that is of the AI model and that is obtained based on the plurality of test sets. In a case of weighted averaging, when the second indication information indicates the comprehensive performance requirement, weights of different test sets, and the like may be further included.

It should be noted that, in step 801 and step 802, sending may be performed by using a same message, or may be performed by using different messages. If the sending is performed by using different messages, a sequence of step 801 and step 802 is not limited.

Step 802 is optional, and is represented by a dashed line in FIG. 8. For example, when the performance requirement is specified in a protocol, or is determined by the terminal, step 802 may not need to be performed.

Step 803: The terminal determines a second test result based on the at least one test set and the performance requirement for the AI model.

For example, the terminal may test the AI model based on the at least one test set, to obtain a performance indicator of the AI model. For a specific process, refer to the descriptions in FIG. 4. The second test result is determined based on the performance indicator of the AI model and the performance requirement for the AI model. For example, if the performance indicator of the AI model exceeds the performance requirement, it is considered that the AI model meets the performance requirement. If the performance indicator of the AI model does not exceed the performance requirement, it is considered that the AI model does not meet the performance requirement. The second test result specifically indicates that each of the AI models participating in the test meets or does not meet the performance requirement, indicates an AI model that meets the performance requirement and that is in the AI models participating in the test, indicates an AI model that does not meet the performance requirement and that is in the AI models participating in the test, indicates an AI model to be subsequently used by the terminal, indicates the terminal to perform a subsequent operation in a non-AI manner, or the like. For a specific process of generating the second test result, refer to the first indication information in the procedure shown in FIG.

4. A difference from the procedure shown in FIG. 4 is as follows. In the procedure shown in FIG. 4, the terminal reports the first test result to the base station, and the base station determines the first indication information based on the reported first test result. However, in the procedure shown in FIG. 8, the terminal directly obtains the second test result of the AI model based on the performance requirement and the performance indicator obtained by testing the AI model.

For example, the terminal determines three test sets by using the first information in step 801. The three test sets are respectively referred to as a test set 1, a test set 2, and a test set 3. The terminal determines three performance requirements by using the second indication information in step 802. The three performance requirements are respectively referred to as a performance requirement 1 corresponding to the test set 1, a performance requirement 2 corresponding to the test set 2, and a performance requirement 3 corresponding to the test set 3. For an AI models participating in the test, the terminal tests the AI model based on the test set 1 to obtain a first performance indicator of the AI model, and compares the performance requirement 1 with the first performance indicator of the AI model, to determine whether the AI model meets the performance requirement. For example, when the first performance indicator of the AI model exceeds a requirement of the performance requirement 1, it is considered that the AI model meets the performance requirement. When the first performance indicator of the AI model does not exceed a requirement of the performance requirement 1, it is considered that the AI model does not meet the performance requirement. Similarly, a result indicating whether the AI model meets the performance requirement may also be obtained by using the test set 2 and the performance indicator 2, and a result indicating whether the AI model meets the performance requirement may also be obtained by using the test set 3 and the performance indicator 3. The terminal determines, by combining results that are of the AI model and that are obtained based on the three test sets, whether the AI model meets the performance requirement. For example, as described in step 802, the second indication information in step 802 may further indicate how the terminal determines, based on a plurality of test sets, whether the AI model meets the performance requirement, and the like. For example, when the AI model meets a requirement of each test set, it is considered that the AI model meets the performance requirement. Alternatively, when the AI model meets performance requirements of a half of the test sets, it is considered that the AI model meets the performance requirement.

Step 804: The terminal sends second information to the base station, where the second information indicates the second test result of the AI model.

According to the foregoing method, the base station sends, to the terminal, the first information used to determine the at least one test set and performance requirement information. The terminal tests the AI model based on the at least one test set, to obtain the test result of the AI model, and determines, based on the performance indicator of the AI model and the performance requirement, information such as whether the AI model meets the requirement, and notifies the base station of the information, so that the base station manages, controls, and evaluates the AI model used by the terminal.

It should be noted that the request information, the first information, the second information, first request information, second request information, or the like in this application may indicate at least one piece of information. It may be understood that the first information, the second information, the first request information, the second request information, or the like may explicitly indicate corresponding information. For example, the first information may explicitly indicate the at least one test set, and an explicit indication manner may be directly carrying corresponding information. For example, the first information may directly carry the at least one test set. Alternatively, an identifier of corresponding information may be carried. For example, the first information may carry identification information of the at least one test set. Alternatively, the request information, the first information, the second information, the first request information, or the second request information may implicitly indicate corresponding information. For example, the first information may implicitly indicate the at least one test set, and an implicit indication may be implicitly indicating by using one or more of manners such as scrambling, a reference signal sequence, a resource location, or the like. For example, the base station may configure a plurality of test sets for the terminal. By scrambling, in a specific manner, at least one test set used for model training, the base station may indicate the terminal to perform model training and the like on the at least one test set scrambled in the specific manner.

It may be understood that, to implement functions in the foregoing methods, the base station and the terminal include corresponding hardware structures and/or software modules for performing the functions. A person skilled in the art should be easily aware that, with reference to units and method steps in the examples described in this application, this application can be implemented by hardware or a combination of hardware and computer software. Whether a function is performed by hardware or hardware driven by computer software depends on particular application scenarios and design constraints of the technical solutions.

FIG. 9 and FIG. 10 each are a schematic diagram of a structure of a possible communication apparatus according to this application. The communication apparatus may be configured to implement a function of the terminal or the base station in the foregoing methods, and therefore can also implement beneficial effects of the foregoing methods. In this application, the communication apparatus may be one of the terminals 120a to 120j shown in FIG. 1, or may be the base station 110a or 110b shown in FIG. 1, or may be a module (for example, a chip) used in a terminal or a base station.

As shown in FIG. 9, a communication apparatus 900 includes a processing unit 910 and a transceiver unit 920. The communication apparatus 900 is configured to implement a function of the terminal or the base station in the method shown in FIG. 5, FIG. 7, or FIG. 8.

When the communication apparatus 900 is configured to implement the function of the terminal in the method shown in FIG. 5, FIG. 7, or FIG. 8, the transceiver unit 920 is configured to receive first information from a base station; and the processing unit 910 is configured to test an AI model based on at least one test set, to obtain a test result.

When the communication apparatus 900 is configured to implement the function of the base station in the method shown in FIG. 5, FIG. 7, or FIG. 8, the processing unit 910 is configured to determine first information; and the transceiver unit 920 is configured to send the first information to a terminal, and receive second information from the terminal.

For more detailed descriptions of the processing unit 910 and the transceiver unit 920, directly refer to related descriptions in the method shown in FIG. 5, FIG. 7, or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, store input data needed by the processor 1010 to run instructions, or store data generated after the processor 1010 runs instructions.

When the communication apparatus 1000 is configured to implement the foregoing methods, the processor 1010 is configured to implement a function of the processing unit 910, and the interface circuit 1020 is configured to implement a function of the transceiver unit 920.

When the communication apparatus is a chip used in a terminal, the chip in the terminal implements a function of the terminal in the foregoing methods. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing methods. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be disposed in a base station or a terminal. Certainly, the processor and the storage medium may alternatively exist in a base station or a terminal as discrete components.

All or some of the methods in this application may be implemented by software, hardware, firmware, or any combination thereof. When software is used to implement the foregoing embodiments, all or some of the foregoing embodiments may be implemented in a form of a computer program product. The computer program product includes one or more computer programs or instructions. When the computer programs or instructions are loaded and executed on a computer, the procedures or functions according to this application are completely or partially executed. The computer may be a general-purpose computer, a dedicated computer, a computer network, a network device, user equipment, a core network device, OAM, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or may be a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. In the text descriptions of this application, the character "/" generally indicates an "or" relationship between associated objects. In a formula in this application, the character "/" indicates a "division" relationship between associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. The sequence numbers of the foregoing processes do not mean execution sequences, and the execution sequences of the processes should be determined based on functions and internal logic of the processes.

**Claims**

1. A model test method, comprising:

receiving first information from a network device, wherein the first information is used to determine at least one test set;
testing an artificial intelligence AI model based on the at least one test set, to obtain a test result; and
sending second information to the network device, wherein the second information indicates the test result of the AI model.

**2.** The method according to claim 1, wherein

the first information comprises indication information of the at least one test set; or
the first information comprises a reference signal, and the method further comprises: determining the at least one test set based on the reference signal.

**3.** The method according to claim 1 or 2, wherein the second information indicates at least one of the following:

AI models participating in the test;
a test result corresponding to each AI model; or
a test set corresponding to each test result.

**4.** The method according to any one of claims 1 to 3, wherein the test result comprises a first test result, and the first test result indicates an output that is of the AI model and that is obtained based on the at least one test set; or the first test result indicates a performance indicator of the AI model obtained by testing the AI model based on the at least one test set.

**5.** The method according to claim 4, further comprising: receiving first indication information from the network device, wherein the first indication information indicates that each of the AI models participating in the test meets or does not meet a performance requirement, indicates an AI model that meets a performance requirement and that is in the AI models participating in the test, indicates an AI model that does not meet a performance requirement and that is in the AI models participating in the test, indicates an AI model to be subsequently used by a terminal, or indicates a terminal to perform a corresponding operation in a non-AI manner.

**6.** The method according to any one of claims 1 to 3, wherein the test result comprises a second test result, and the second test result indicates that each of the AI models participating in the test meets or does not meet a performance requirement, indicates an AI model that meets a performance requirement and that is in the AI models participating in the test, indicates an AI model that does not meet a performance requirement and that is in the AI models participating in the test, indicates an AI model to be subsequently used by a terminal, or indicates a terminal to perform a subsequent operation in a non-AI manner.

**7.** The method according to claim 6, further comprising: receiving second indication information from the network device, wherein the second indication information indicates the performance requirement for the AI model.

**8.** The method according to any one of claims 1 to 7, further comprising:
sending request information to the network device, wherein the request information is used to request the first information, or is used to request to test the AI model.

**9.** The method according to claim 8, wherein the request information comprises indication information of an input format of the AI models participating in the test.

**10.** A model test method, comprising:

sending first information to a terminal, wherein the first information is used to determine at least one test set; and
receiving second information from the terminal, wherein the second information indicates a test result of an artificial intelligence AI model, and the test result corresponds to the at least one test set.

**11.** The method according to claim 10, wherein the first information comprises indication information of the at least one test set; or the first information comprises a reference signal.

**12.** The method according to claim 10 or 11, wherein the second information indicates at least one of the following:

the AI models participating in the test;
a test result corresponding to each AI model; or
a test set corresponding to each test result.

**13.** The method according to any one of claims 10 to 12, wherein the test result comprises a first test result, and the first test result indicates an output that is of the AI model and that is obtained based on the at least one test set; or the first test result indicates a performance indicator of the AI model obtained by testing the AI model based on the at least one test set.

**14.** The method according to claim 13, further comprising:

determining first indication information based on the first test result and;
sending the first indication information to the terminal, wherein the first indication information indicates that each of the AI models participating in the test meets or does not meet a performance requirement, indicates an AI model that meets a performance requirement and that is in the AI models participating in the test, indicates an AI model that does not meet a performance requirement and that is in the AI models participating in the test, indicates an AI model to be subsequently used by the terminal, or indicates the terminal to perform a corresponding operation in a non-AI manner.

15. The method according to any one of claims 10 to 12, wherein the test result comprises a second test result, and the second test result indicates that each of the AI models participating in the test meets or does not meet a performance requirement, indicates an AI model that meets a performance requirement and that is in the AI models participating in the test, indicates an AI model that does not meet a performance requirement and that is in the AI models participating in the test, indicates an AI model to be subsequently used by the terminal, or indicates the terminal to perform a subsequent operation in a non-AI manner.

16. The method according to claim 15, further comprising:
sending second indication information to the terminal, wherein the second indication information indicates the performance requirement for the AI model.

17. The method according to any one of claims 10 to 16, further comprising:
receiving request information from the terminal, wherein the request information is used to request the first information, or is used to request to test the AI model.

18. The method according to claim 17, wherein the request information comprises indication information of an input format of the AI models participating in the test.

19. A communication apparatus, comprising a unit configured to implement the method according to any one of claims 1 to 9.

20. A communication apparatus, comprising a processor and a memory, wherein the processor is coupled to the memory, and the processor is configured to implement the method according to any one of claims 1 to 9.

21. A communication apparatus, comprising a unit configured to implement the method according to any one of claims 10 to 18.

22. A communication apparatus, comprising a processor and a memory, wherein the processor is coupled to the memory, and the processor is configured to implement the method according to any one of claims 10 to 18.

23. A communication system, comprising the communication apparatus according to claim 19 or 20 and the communication apparatus according to claim 21 or 22.

24. A computer-readable storage medium, wherein the computer-readable storage medium stores instructions; and when the instructions are run on a computer, the computer is enabled to perform the method according to any one of claims 1 to 9 or the method according to any one of claims 10 to 18.

25. A computer program product, comprising instructions, wherein when the instructions are run on a computer, the computer is enabled to perform the method according to any one of claims 1 to 9 or the method according to any one of claims 10 to 18.

26. A chip system, comprising a processor, configured to implement the method according to any one of claims 1 to 9 or the method according to any one of claims 10 to 18, wherein the chip system comprises a chip, or comprises a chip and another discrete device.

FIG. 1

FIG. 2a

Neuron   Layer   Weight

Input
layer

Hidden layer

Output
layer

FIG. 2b

Data
source

Training data

Model training
node

Model deployment/
update

Model
feedback

Inference data

Model
inference node

Output

Execution

Execution

Execution

Execution
object

Execution
object

Performance feedback

FIG. 2c

FIG. 3a

FIG. 3b

FIG. 4

500: Request information, where the request
information is used to request to test an AI
model, or request first information

501: First information, where the first information
is used to determine at least one test set

502: The terminal tests the AI model based on
the at least one test set, to obtain a test result

503: Second information, where the
second information indicates the test
result of the AI model

FIG. 5

```
┌──────────────┐        ┌──────────────┐        ┌──────────────┐
│ Core network │        │ Base station │        │   Terminal   │
│    device    │        │              │        │              │
└──────┬───────┘        └──────┬───────┘        └──────┬───────┘
```

**600: Request information, where the request**
**information is used to test an AI**
**model, or request first information**

**601: First information, where the first information**
**is used to determine at least one test set**

602: The terminal tests the AI model
based on the at least one test set, to
obtain a test result

**603: Second information, where the second**
**information indicates the test result of the AI model**

## FIG. 6

```
┌──────────────┐                          ┌──────────────┐
│ Base station │                          │   Terminal   │
└──────┬───────┘                          └──────┬───────┘
```

700: Request information, where the
request information is used to request to
test an AI model, or request first
information

701: First information, where the first
information is used to determine at
least one test set

702: The terminal tests the AI model
based on the at least one test set, to
obtain a first test result

703: Second information, where the
second information indicates the first
test result of the AI model

**704: First indication information, where**
**the first indication information indicates a**
**test conclusion of the AI model**

## FIG. 7

| Base station | | Terminal |
|---|---|---|

800: Request information, where the request information is used to request to test an AI model, or request first information

801: First information, where the first information is used to determine at least one test set

802: Second indication information, where the second indication information indicates a performance requirement of the base station for the AI model

803: The terminal determines a second test result based on the at least one test set and the performance requirement for the AI model

804: Second information, where the second information indicates the second test result of the AI model

FIG. 8

Communication apparatus 900

Processing unit 910

Transceiver unit 920

FIG. 9

Communication apparatus 1000

Processor 1010

Interface circuit 1020

Memory 1030

FIG. 10

| INTERNATIONAL SEARCH REPORT | International application No. |
|---|---|
| | **PCT/CN2022/117999** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 模型, 测试, 服务器, 客户端, 用户端, 网络端, 性能, 发送, 请求, 接收, 测试集, 数据, 满足, 格式, 指标, 结果; AI, model, test+, client, server, user side, network side, performance, send+, request+, receiv+, test set, data, satisf+, format, metrics, results

**C. DOCUMENTS CONSIDERED TO BE RELEVANT**

| Category* | Citation of document, with indication, where appropriate, of the relevant passages | Relevant to claim No. |
|---|---|---|
| X | CN 111476349 A (PING AN INTERNATIONAL SMART CITY TECHNOLOGY CO., LTD.) 31 July 2020 (2020-07-31) <br> claims 1-10, and description, paragraphs [0002]-[0033], and figures 1-4 | 1-9, 19, 20, 24-26 |
| Y | CN 111476349 A (PING AN INTERNATIONAL SMART CITY TECHNOLOGY CO., LTD.) 31 July 2020 (2020-07-31) <br> claims 1-10, and description, paragraphs [0002]-[0033], and figures 1-4 | 23 |
| X | CN 109634843 A (INSTITUTE OF SOFTWARE, CHINESE ACADEMY OF SCIENCES) 16 April 2019 (2019-04-16) <br> claims 1-10, and description, paragraphs [0003] and [0006]-[0029] | 10-18, 21, 22, 24-26 |
| Y | CN 109634843 A (INSTITUTE OF SOFTWARE, CHINESE ACADEMY OF SCIENCES) 16 April 2019 (2019-04-16) <br> claims 1-10, and description, paragraphs [0003] and [0006]-[0029] | 23 |
| A | CN 112306829 A (CHENGDU ANYIXUN TECHNOLOGY CO., LTD.) 02 February 2021 (2021-02-02) <br> entire document | 1-26 |

☑ Further documents are listed in the continuation of Box C.      ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 November 2022** | **14 December 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/117999** |

**C.    DOCUMENTS CONSIDERED TO BE RELEVANT**

| Category* | Citation of document, with indication, where appropriate, of the relevant passages | Relevant to claim No. |
|---|---|---|
| A | CN 109873728 A (TENCENT TECHNOLOGY SHENZHEN CO., LTD.) 11 June 2019 (2019-06-11)<br>    entire document | 1-26 |
| A | CN 111340242 A (ALIPAY (HANGZHOU) INFORMATION TECHNOLOGY CO., LTD.) 26 June 2020 (2020-06-26)<br>    entire document | 1-26 |
| A | US 2021097439 A1 (SIEMENS HEALTHCARE GMBH) 01 April 2021 (2021-04-01)<br>    entire document | 1-26 |
| A | WO 2018018572 A1 (HUAWEI TECHNOLOGIES CO., LTD.) 01 February 2018 (2018-02-01)<br>    entire document | 1-26 |

Form PCT/ISA/210 (second sheet) (January 2015)

**INTERNATIONAL SEARCH REPORT**
Information on patent family members

International application No.

**PCT/CN2022/117999**

| Patent document cited in search report | | | Publication date (day/month/year) | Patent family member(s) | | | Publication date (day/month/year) |
|---|---|---|---|---|---|---|---|
| CN | 111476349 | A | 31 July 2020 | None | | | |
| CN | 109634843 | A | 16 April 2019 | None | | | |
| CN | 112306829 | A | 02 February 2021 | None | | | |
| CN | 109873728 | A | 11 June 2019 | None | | | |
| CN | 111340242 | A | 26 June 2020 | None | | | |
| US | 2021097439 | A1 | 01 April 2021 | EP | 3798934 | A1 | 31 March 2021 |
| | | | | CN | 112580815 | A | 30 March 2021 |
| WO | 2018018572 | A1 | 01 February 2018 | None | | | |

Form PCT/ISA/210 (patent family annex) (January 2015)

**REFERENCES CITED IN THE DESCRIPTION**

**Patent documents cited in the description**

- CN 202111061622